# EUROPÄISCHE PATENTSCHRIFT

(11) **EP 3 648 270 B1**
(45) Veröffentlichungstag und Bekanntmachung des Hinweises auf die Patenterteilung: **11.02.2026**
(21) Anmeldenummer: 18204135.0
(22) Anmeldetag: 02.11.2018
(51) Int. Cl.: H02G 1/12, H01R 43/28

(54) **KABELBEARBEITUNGSVORRICHTUNG**
CABLE TREATING DEVICE
DISPOSITIF D'USINAGE DE CÂBLE

(43) Veröffentlichungstag der Anmeldung: 06.05.2020
(73) Patentinhaber: KOMAX HOLDING AG, 6036 Dierikon (CH)
(72) Erfinder: FEUBLI, Dominik, 6010 Kriens (CH)
(74) Vertreter: EGLI-EUROPEAN PATENT ATTORNEYS

(56) Entgegenhaltungen:
- DE-A1- 102013 112 118
- DE-A1- 19 735 655
- JP-U- H0 286 679
- US-A- 5 816 384

## Beschreibung

### TECHNISCHES GEBIET

Die vorliegende Offenbarung betrifft eine Kabelbearbeitungsvorrichtung, welche ein Kabel oder eine Mehrzahl von Kabeln nach einem erfolgten Konfektioniervorgang zur Entnahme ausgibt.

### STAND DER TECHNIK

Kabelbearbeitungsvorrichtungen oder Kabelbearbeitungsvorrichtungen sind üblicherweise mit einer Kabelablage ausgestattet, die beispielsweise in der Form einer Kabelwanne oder Entnahmewanne ausgebildet sind. Typischerweise produziert die Kabelbearbeitungsvorrichtung eine Mehrzahl von Kabeln, die zusammen ein Kabellos (eine Kabelzusammenstellung) bilden. Beispielsweise bildet eine bestimmte Anzahl von gleichartig konfektionierten Kabeln oder von jeweils gleichartig konfektionierten Gruppen von Kabeln ein Kabellos.

Verschiedene Prozessschritte bzw. Konfektionierungsschritte für ein zu konfektionierendes Kabel, wie z. B. ein Abisolierschritt, ein Crimpschritt und dergleichen, können ggf. fehlerhaft ausgeführt werden und zur Konfektionierung eines Kabels führen, das vorgegebenen oder vorgebbaren Qualitätsanforderungen nicht genügt.

Beispiele für solche Qualitätsanforderungen umfassen unzureichend abisolierte Leiterenden, einzelne Litzen, die die Sollöffnung eines Abschlussstücks verfehlt haben (beispielsweise einem Steckkontakt, einer Aderendhülse oder dergleichen), schief oder unzureichend fest angecrimpte Steckverbinder usw.

Ein konfektioniertes Kabel, das einer solchen Qualitätsanforderung nicht genügt, wird allgemein als Schlechtkabel bezeichnet und in der Regel als Ausschuss entsorgt. Entsprechend wird ein konfektioniertes Kabel, das der Qualitätsanforderung genügt, allgemein als Gutkabel bezeichnet. Kabelbearbeitungsvorrichtungen sind zunehmend mit Qualitätsüberwachungssystemen ausgestattet, die verschiedene Prozessschritte, wie z. B. das Abisolieren und das Crimpen, überwachen und solche Schlechtkabel erkennen können. Ein Qualitätsüberwachungssystem kann hierzu beispielsweise beobachten, dass der Abisoliervorgang und/oder der Crimpvorgang für ein zu konfektionierendes fehlerhaft verläuft, und daraufhin eine dahingehende Bewertung treffen, dass das aktuell ausgegebene Kabel ein Schlechtkabel ist.

Ein herkömmlicher Ansatz ist im Folgenden beschrieben: Wenn das Qualitätsüberwachungssystem ein Schlechtkabel erkennt, wird veranlasst, dass das Schlechtkabel für eine Bedienperson erkennbar markiert wird. Beispielsweise wird bei einem fehlerhaft angecrimpten Kontakt veranlasst, dass dieser Kontakt wieder abgetrennt wird. Alternativ wird beispielsweise bei einem fehlerhaft abisolierten Leiterende veranlasst, dass kein Kontakt angecrimpt wird.

Auch wenn für ein solches Schlechtkabel automatisiert ein fehlerfreies Kabel nachproduziert werden kann, gelangt das Schlechtkabel dennoch in die Kabelablage und muss von der Bedienperson aussortiert werden. Wenn die Bedienperson ein Schlechtkabel übersieht, bleibt dieses Schlechtkabel ein Teil des Kabelloses.

Das Dokument DE 197 35 655 A1 offenbart ein Verfahren zum Herstellen von verdrillten, konfektionierten Leitungen und eine zugehörige Vorrichtung. Diese Vorrichtung weist eine Wanne auf, die in ihrem vorderen Bereich eine Ablage für die guten, konfektionierten Leitungen bildet und in ihrem hinteren Bereich eine Ablage für solche Leitungen bildet, die nicht innerhalb der vorgegebenen Toleranzen liegen.

Das Dokument US 5,816,384 A offenbart eine Kabelverarbeitungsvorrichtung mit einer Sammelwanne, wobei Kabel aus einer rotierenden Mehrfachwanne in die Sammelwanne übernommen werden. Die Mehrfachwanne umfasst vier Kammern.

Das Dokument DE 10 2013 112 118 A1 offenbart eine Kabelablagevorrichtung mit einem Ablagebereich, der im Bereich einer Beschickposition der Kabelablagevorrichtung als offene Ablagerinne ausgebildet ist.

Das Dokument JPH0286679U offenbart eine Vorrichtung zur Bearbeitung von Langgut mit einer Sortiereinrichtung zur Qualitätssortierung, wobei dabei eine Mehrfachwanne genutzt wird, welche, durch eine steuerbare Barriere gesteuert, die Ware in zwei Ablagen auf unterschiedlichen Seiten der Mehrfachwanne ablegt.

Es besteht Bedarf an einer Kabelbearbeitungsvorrichtung, bei welcher der Vorgang zum Bereitstellen einer fehlerfreien Kabelloses verbessert ist. Die Aufgabe wird gelöst durch eine Kabelbearbeitungsvorrichtung gemäss Anspruch 1. Vorteilhafte Weiterbildungen sind in den abhängigen Ansprüchen angegeben. Es versteht sich, dass einzelne hierin beschriebene Ausführungsformen, Aspekte und/oder Merkmale miteinander kombiniert werden können oder entsprechend weggelassen werden können, wenn angemessen.

### ZUSAMMENFASSUNG DER ERFINDUNG

Gemäss einem Aspekt wird eine Kabelbearbeitungsvorrichtung nach Anspruch 1 bereitgestellt. Die Kabelbearbeitungsvorrichtung umfasst mindestens eine Bearbeitungseinheit zur Konfektionierung eines Kabels. Die Kabelbearbeitungsvorrichtung umfasst ausserdem eine mit einem Selektionssignal ansteuerbare Sortiereinrichtung zum Ausgeben eines aus der Bearbeitungseinheit übernommenen Kabels auf einer ersten Seite oder auf einer zweiten Seite gemäss dem Selektionssignal. Die Sortiereinrichtung ist eine Mehrfachwanne, die um eine Drehachse gemäss dem Selektionssignal in Richtung der ersten Seite oder in Richtung der zweiten Seite drehbar ist.

Mit anderen Worten: Die Drehachse verläuft ungefähr parallel zur Kabelachse des übernommenen Kabels.

Eine Bearbeitungseinheit, oder Konfektionierungseinheit, ist beispielsweise in Form einer Abisolierungseinrichtung, einer Crimppresseinrichtung oder dergleichen bereitgestellt, aber darauf nicht beschränkt. Das Selektionssignal wird beispielsweise extern erzeugt, oder das Selektionssignal wird von einer geeigneten Komponente der Kabelbearbeitungsvorrichtung intern erzeugt. erfolgt die Ausgabe des übernommenen Kabels gemäss dem Selektionssignal entweder auf der ersten Seite oder auf der zweiten Seite. Besonders bevorzugt übernimmt die Sortiereinrichtung immer genau ein Kabel, typischerweise konfektioniertes Kabel, aus der Bearbeitungseinheit, woraufhin die Selektion für dieses übernommene Kabel gemäss dem Selektionssignal erfolgt. Im Anschluss an die Selektion übernimmt die Sortiereinrichtung das nächste eine Kabel aus der Bearbeitungseinheit, woraufhin die Selektion für dieses übernommene Kabel erfolgt, usw.

Durch die Selektion, die durch Ansteuern der Sortiereinrichtung mit dem Selektionssignal erfolgt, wird veranlasst, dass Gutkabel immer auf der einen Seite (beispielsweise immer auf der ersten Seite) ausgegeben werden und Schlechtkabel immer auf der anderen Seite (beispielsweise immer auf der zweiten Seite) ausgegeben werden. Dies kann die Bereitstellung eines fehlerfreien Kabelloses (eines Kabelloses, das nur Gutkabel enthält) vereinfachen.

Mit einer selektiv drehbaren Mehrfachwanne wird der Sortiervorgang beschleunigt.

Der Sortiervorgang selbst ist auf diese Weise einfach und sicher ausführbar.

Die Kabelbearbeitungsvorrichtung umfasst ausserdem eine Selektionseinrichtung. Die Selektionseinrichtung ist eingerichtet zum Ausgeben des Selektionssignals an die Sortiereinrichtung, und zwar abhängig von einer detektierten Konfektionierungsqualität des Kabels. Eine Konfektionierungsqualität, wie hierin verwendet, ist beispielsweise eine Unterscheidung in ein Gutkabel und ein Schlechtkabel, wie oben erläutert. Es ist aber auch möglich, dazwischenliegende Qualitäten zu berücksichtigen und einen oder mehrere Schwellenwerte zu definieren, in deren Abhängigkeit das Selektionssignal erzeugt wird.

Zur Detektion umfasst die Kabelbearbeitungsvorrichtung eine Detektionseinheit. Die Detektionseinheit ist eingerichtet zur Detektion der Konfektionierungsqualität des Kabels.

Als ein gebräuchliches Beispiel für eine Detektionseinheit ist eine in die oben erwähnte Crimppresseinrichtung integrierte Überwachungseinrichtung für die Crimpkraft. Die Überwachungseinrichtung ist dazu eingerichtet, unter Verwendung eines Kraftsensors den Kraftverlauf beim Durchführen eines Crimpvorganges (eines Verpressungsvorgangs des abisolierten Kabelendes mit dem Kontakt) mittels der Crimppresseinrichtung aufzuzeichnen und mit einem Soll-Verlauf zu vergleichen. Anhand des Vergleichs sind Prozessfehler erkennbar, z. B. fehlende Litzen im Kontakt.

Als ein weiteres Beispiel sind als Detektionseinheit eine Bilderfassungseinheit (z. B. eine Digitalkamera) und eine Bildauswertungseinheit bereitgestellt, wobei die Bilderfassungseinheit ein kontinuierlich oder in festgelegten oder festlegbaren Zeitabständen erfasstes Bild eines repräsentativen Bereichs eines konfektionierten Kabels an die Bildauswertungseinheit übermittelt. Die Bildauswertungseinheit führt beispielweise eine Bildauswertungssoftware aus, die anhand des übermittelten Bildes die Bewertung bzw. Detektion der Konfektionierungsqualität des zugrundeliegenden Kabels durchführt.

Bei der Kabelbearbeitungsvorrichtung umfasst die Konfektionierungsqualität des Kabels eine ausreichende Qualität des Kabels, bei der das Kabel als Gutkabel klassifiziert wird, und sie umfasst ausserdem eine nicht ausreichende Qualität des Kabels, bei der das Kabel als Schlechtkabel klassifiziert wird. Es ist hierbei vorgesehen, dass auf der ersten Seite eine Gutkabel-Übernahmeeinrichtung und auf der zweiten Seite eine Schlechtkabel-Übernahmeeinrichtung angeordnet ist.

Unter einer Übernahmeeinrichtung, wie hierin verwendet, wird ein Bauteil oder ein Element oder eine Mehrzahl von Bauteilen oder Elementen verstanden, die dazu ausgebildet sind, ein Gutkabel bzw. ein Schlechtkabel zu übernehmen und ggf. für einen gewissen Zeitraum aufzubewahren. Beispielsweise weist die Gutkabel-Übernahmeeinrichtung eine Gutkabel-Entnahmewanne auf. Einer Bedienperson (oder auch eine automatische Entnahmeeinrichtung, beispielweise ein Entnahmeroboter) wird es mit der Konfiguration der Gutkabel-Entnahmewanne ermöglicht, das bzw. die in der Gutkabel-Entnahmewanne enthaltenen Gutkabel zu entnehmen.

Ähnlich wie auf Seiten der Gutkabel umfasst bei Ausführungsformen die Schlechtkabel-Übernahmeeinrichtung eine Schlechtkabel-Entnahmewanne. Einer Bedienperson (oder auch eine automatische Entnahmeeinrichtung, beispielweise ein Entnahmeroboter) wird es mit der Konfiguration der Schlechtkabel-Entnahmewanne ermöglicht, das bzw. die in der Schlechtkabel-Entnahmewanne enthaltenen Schlechtkabel zu entnehmen.

Die Kabelbearbeitungsvorrichtung weist ausserdem ein Transportband zum Übergeben des Kabels aus der mindestens einen Bearbeitungseinheit in die Sortiereinrichtung auf.

Gemäss einer vorteilhaften Ausbildung weist die Mehrfachwanne drei etwa gleich grosse Wannenkammern auf. In etwa gleich grosse Wannenkammern haben ungefähr dasselbe Volumen. Bei der drehbaren Lagerung und in etwa gleich grossen Wannenkammern, insbesondere drei in etwa gleich grossen Wannenkammern, kann sich der Vorteil ergeben, dass eine zentrische Lagerung im Schwerpunkt möglich ist, wodurch Unwuchten usw. reduziert sind.

### KURZE BESCHREIBUNG DER ZEICHNUNGEN

Nachfolgend werden Ausführungsformen der vorliegenden Offenbarung anhand von Zeichnungen näher erläutert. In den Zeichnungen zeigen:
Fig. 1: eine schematische seitliche Schnittansicht einer herkömmlichen Kabelbearbeitungsvorrichtung zur Erläuterung der technischen Grundlagen;
Fig. 2: eine schematische seitliche Schnittansicht einer Kabelbearbeitungsvorrichtung gemäss einer Ausführungsform;
Fig. 3: eine Draufsicht auf die Kabelbearbeitungsvorrichtung gemäss der Ausführungsform;
Fig. 4: eine schematische perspektivische Ansicht einer Kabelablage der Kabelbearbeitungsvorrichtung gemäss der Ausführungsform; und
Fig. 5: eine schematische perspektivische Ansicht der Kabelablage aus Fig. 4 aus einer anderen Blickrichtung.

### BESCHREIBUNG VON AUSFÜHRUNGSFORMEN

In der nachfolgenden Beschreibung von Ausführungsformen sind gleiche oder gleichartige Elemente mit denselben Bezugszeichen versehen. Deren wiederholte Beschreibung wird weggelassen.

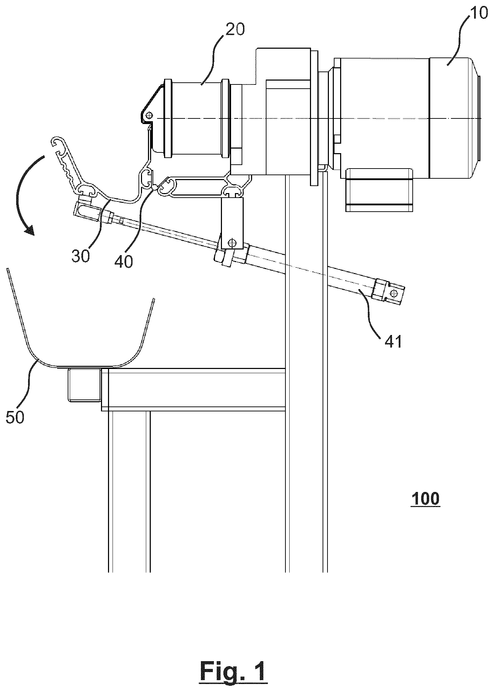

Fig. 1 zeigt in einer schematischen Schnittansicht eine herkömmliche Kabelbearbeitungsvorrichtung 100. Die Kabelbearbeitungsvorrichtung 100 weist ein Transportband 20 auf, das von einem Antriebsmotor 10 angetrieben wird und auf welchem konfektionierte Kabel aus einer oder mehreren Bearbeitungsstationen der Kabelbearbeitungsvorrichtung in Richtung einer Ablagewanne 30 transportiert werden. Die Ablagewanne 30 ist mittels eines ansteuerbaren Schwenkzylinders 41 um eine Schwenkachse 40 schwenkbar, wie mit dem Pfeil angedeutet. In der Ablagewanne zu einem bestimmten Zeitpunkt enthaltene Gutkabel, aber auch Schelchtkabel, (nicht dargestellt) fallen bzw. rutschen bei einer Schwenkbewegung in die Entnahmewanne 50 und können dort entnommen werden.

Bei Kabelverarbeitungsmaschinen wie der in Fig. 1 dargestellten herkömmlichen Kabelbearbeitungsvorrichtung 100 vom beschriebenen "Schwenktyp" ermöglicht der von der Ablagewanne 30 gebildete Zwischenspeicher das Sammeln einer vorbestimmten oder bestimmbaren Anzahl von fertig bearbeiteten Kabeln. Wenn die Anzahl erreicht ist, ist ein Kabellos oder Fertigungslos vollständig. Das produzierte Kabellos wird durch die beschriebene Schwenkbewegung der Ablagewanne 30 automatisch oder nach Quittierung durch eine Bedienperson in die Entnahmewanne 50 übergeben, wo sie beispielsweise von Hand entnommen werden können, während die Kabelbearbeitungsvorrichtung 100 das nächste Fertigungslos produziert und die zu diesem nächsten Fertigungslos gehörenden Kabel in der wieder aufwärts geschwenkten Ablagewanne 30 zwischenlagert.

Das Transportband 20 stellt sicher, dass die Kabel beim Hineintransportieren in die Kabelbearbeitungsvorrichtung 100 hinein und bei der Bearbeitung des nacheilenden Endes (Stromabwärts-Endes) des Kabels gestreckt bleibt. Wird dieses nacheilende Ende des Kabels neben dem Transportband fallen gelassen, rutscht es durch sein Eigengewicht in Kombination mit der Transportbewegung des Transportbandes seitwärts vom Transportband 20 und fällt in die Ablagewanne 30.

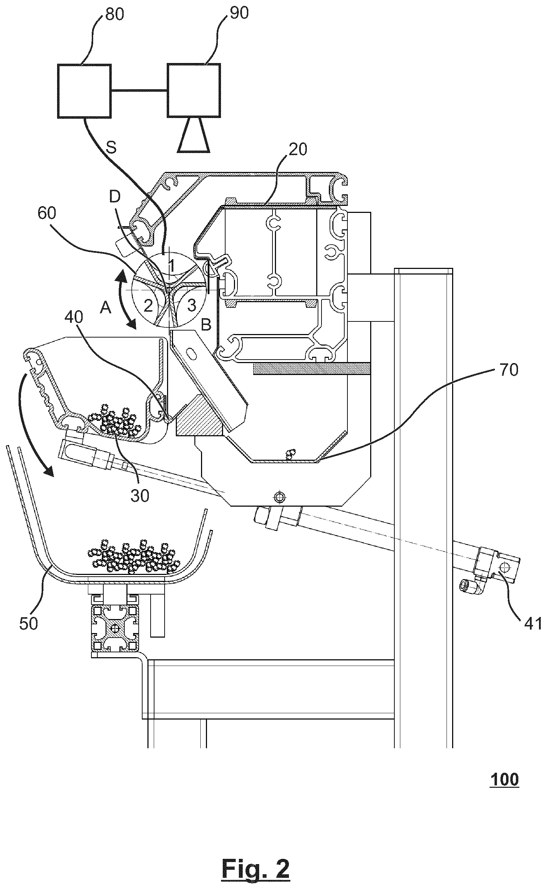

In Fig. 2 ist in einer seitlichen Schnittansicht analog zu Fig. 1 eine Kabelbearbeitungsvorrichtung 100 gemäss einer Ausführungsform der vorliegenden Offenbarung dargestellt. Die Kabelbearbeitungsvorrichtung 100 gemäss der Ausführungsform weist wiederum ein Transportband 20 auf, das von einem (nicht dargestellten) Antriebsmotor bewegt wird. Eine Ablagewanne 30 ist um eine Schwenkachse 40 mittels eines pneumatisch betätigten Schwenkzylinders 41 in etwa entlang der Pfeilrichtung des Pfeils an der Ablagewanne 30 verschwenkbar, so dass in der Ablagewanne befindliche Kabel in eine Entnahmewanne 50 gleiten.

Zusätzlich zu der Kabelbearbeitungsvorrichtung 100 aus Fig. 1 weist die Kabelbearbeitungsvorrichtung 100 gemäss der Ausführungsform in Fig. 2 eine Sortiereinrichtung 60 auf, die um eine in etwa zur Kabelachse parallele Drehachse D gemäss einem Selektionssignal impuls- bzw. abschnittsweise drehbar ist. Die Sortiereinrichtung 60 weist in dem Ausführungsbeispiel eine erste Wannenkammer 1, eine zweite Wannenkammer 2 und eine dritte Wannenkammer 3 auf, die in etwa gleich gross sind (d. h. mit etwa gleichem Volumen ausgebildet sind) und mit Trennwänden voneinander getrennt sind. Die Trennwände bewirken eine Aufteilung ungefähr in 120°-Abständen.

Ein gefertigtes (konfektioniertes) Kabel gelangt vom Transportband 20 in eine Wanne der Sortiereinrichtung 60. Die Sortiereinrichtung 60 erhält von einer Maschinensteuerung (beispielsweise einer Selektionseinrichtung 80) einen Befehl, sich entweder um ca. 120° im Uhrzeigersinn oder um ca. 120° gegen den Uhrzeigersinn um die Drehachse D zu drehen. Ist beispielsweise das Kabel in die Wannenkammer 1 in Fig. 2 gefallen, würde es sich nach einer Drehbewegung um ca. 120° gegen den Uhrzeigersinn dort befinden, wo in Fig. 2 die Wannenkammer 2 gezeigt ist. Entsprechend würde sich das Kabel nach einer Drehbewegung um ca. 120° im Uhrzeigersinn dort befinden, wo in Fig. 2 die Wannenkammer 3 gezeigt ist.

Bei einer Drehung gegen den Uhrzeigersinn fällt oder rutscht das Kabel entsprechend in die Ablagewanne 30, die sich auf einer Seite A bezogen auf die Sortiereinrichtung 60 befindet. Bei einer Drehung im Uhrzeigersinn fällt oder rutscht das Kabel in eine auf der gegenüberliegenden Seite B befindliche weitere Ablagewanne 70.

In der Konfiguration gemäss der Ausführungsform in Fig. 2 dient die Ablagewanne 30 auf Seite A als Gutkabel-Ablagewanne, während die Ablagewanne 70 auf Seite B als Schlechtkabel-Ablagewanne dient.

Wenn die Losgrösse in der Gutkabel-Ablagewanne 30 erreicht ist, schwenkt die Gutkabel-Ablagewanne 30 durch eine entsprechende Ansteuerung des Pneumatikzylinders 41 um die Schwenkachse herum, so dass das Kabellos in die Gutkabel-Entnahmewanne 50 entleert wird. Nach einem anschliessenden Hochschwenken kann die Kabelbearbeitungsvorrichtung 100 das nächste Los produzieren. Die Schlechtkabel landen entsprechend in der Schlechtkabel-Ablagewanne 70. Falls sich nach Erreichen der Losgrösse in der Gutkabel-Entnahmewanne 50 noch ein Los befindet, stoppt die Maschine, damit eine Bedienperson die Kabel entnehmen kann.

Mit der in Fig. 2 gezeigten Konfiguration der Sortiereinrichtung 60 mit drei Wannenkammern 1, 2, 3 braucht die Sortiereinrichtung 60 nach der Übergabe des Kabels auf die Seite A oder auf die Seite B nicht zurückzudrehen, sondern kann das nächste Kabel direkt in der dann dem Transportband 20 zugewandten Wannenkammer aufnehmen. Dadurch verringert der Sortiervorgang die zeitliche Ausbringungsleistung der Maschine nicht.

In dem in Fig. 2 dargestellten Ausführungsbeispiel ist die Selektionseinrichtung 80 direkt mit der Sortiereinrichtung 60 verbunden. Die vorliegende Offenbarung ist darauf jedoch nicht beschränkt, und es kann auch eine indirekte Verbindung zwischen diesen Elementen bestehen, beispielsweise über eine zwischengeschaltete Maschinensteuerung (nicht dargestellt). Ausserdem ist es auch möglich, dass die Selektionseinrichtung 80 ein Teil einer solchen Maschinensteuerung ist.

Die Selektionseinrichtung 80 gibt zu einem Selektionszeitpunkt ein Selektionssignal S an die Sortiereinrichtung 60 aus, das einer Anweisung zum Drehen der Sortiereinrichtung 60 entweder in Richtung der Seite A oder in Richtung der Seite B entspricht. Der Selektionszeitpunkt ist beispielsweise ein zeitlich getakteter, wiederkehrender Zeitpunkt im Bearbeitungszyklus der Kabelbearbeitungsvorrichtung 100. Der Takt kann fix oder auch variabel sein. Ein variabler Takt kann beispielsweise fallabhängig dadurch festgelegt sein, dass erkannt wird, dass der Übernahmevorgang ein übernommenes Kabels in die jeweils dem Transportband 20 zugewandte Wannenkammer fertiggestellt ist.

In Fig. 2 ist die Selektionseinrichtung 80 ausserdem mit einer Detektionseinheit 90 verbunden. Die Detektionseinheit 90 weist beispielsweise eine Digitalkamera oder dergleichen zum Erfassen eines Bildes des übernommen Kabels auf, sowie eine Möglichkeit zur Bildverarbeitung eines von der Digitalkamera erfassten Bildes. Es ist auch gebräuchlich, dass die Detektionseinheit 90 einen Kraftsensor (nicht dargestellt) zur Crimpkraftüberwachung umfasst, wobei die Detektionseinheit 90 dazu eingerichtet ist, unter Verwendung des Kraftsensors einen Kraftverlauf beim Durchführen eines Crimpvorganges mit einem Soll-Verlauf zu vergleichen und den Vergleich oder das Vergleichsergebnis an die Selektionseinrichtung 80 zu übermitteln.

Die Detektionseinheit 90 bzw. die damit verbundene Selektionseinrichtung 80 erkennt, ob das zu übernehmende Kabel, das als nächstes in die dem Transportband 20 zugewandte Wannenkammer übernommen werden wird, ein Gutkabel oder ein Schlechtkabel darstellt. Alternativ erkennt die Detektionseinheit 90 bzw. die damit verbundene Selektionseinrichtung 80, ob das übernommene Kabel, das in die dem Transportband 20 zugewandte Wannenkammer übernommen wurde, ein Gutkabel oder ein Schlechtkabel darstellt. Das Selektionssignal S wird entsprechend dem Ergebnis der Erkennung erzeugt.

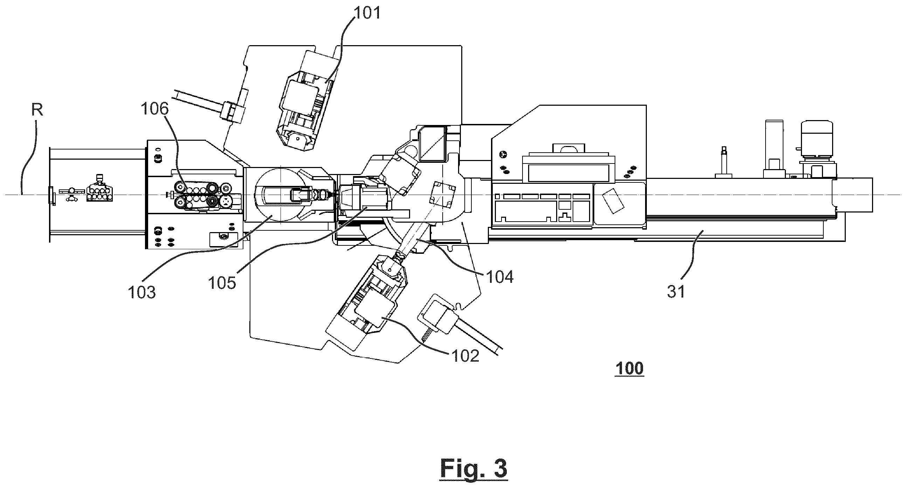

In der Draufsicht in Fig. 3 zu Erläuterungszwecken eine Draufsicht der Kabelbearbeitungsvorrichtung 100 dargestellt. Zur Konfektionierung des Kabels, das entlang einer Kabeleinzugsachse R eingezogen wird und von einem Kabelvorschub 106 durch die Bearbeitungsstationen transportiert wird, weist die Kabelbearbeitungsvorrichtung 100 eine erste Crimppresse 101, eine zweite Crimppresse 102, einen Messerkopf 105 zum Abisolieren, eine erste Schwenkeinheit 103 und eine zweite Schwenkeinheit 104 auf. Eine Gutkabel-Übernahmeeinrichtung 31, die beispielsweise die Gutkabel-Ablagewanne 30 einschliesst, ist auf der rechten Seite in Fig. 3 zu erkennen. Einzelheiten der grundsätzlichen Funktion der Kabelbearbeitungsvorrichtung 100 sind beispielsweise in der Druckschrift EP 2 442 413 A1 beschrieben, die hierin durch Bezugnahme aufgenommen wird.

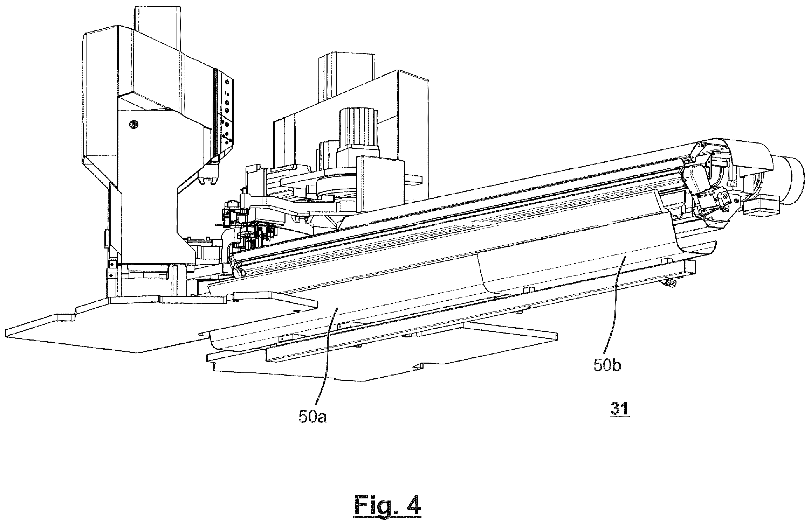

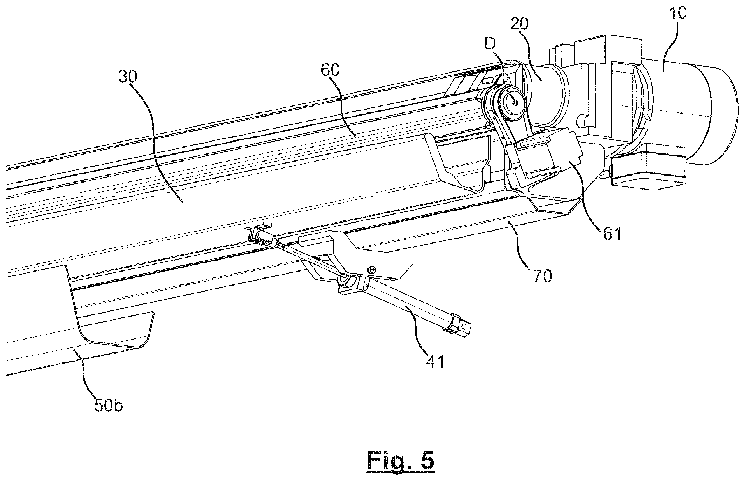

Fig. 4 zeigt eine perspektivische Ansicht der Kabelablage der Kabelbearbeitungsvorrichtung gemäss der Ausführungsform, während Fig. 5 eine schematische perspektivische Ansicht der Kabelablage aus Fig. 4 aus einer anderen Blickrichtung zeigt.

In Fig. 4 ist erkennbar, dass die Gutkabel-Übernahmeeinrichtung 31 eine Gutkabel-Entnahmewanne 50 umfasst, die einen beweglichen Teil 50a und einen feststehenden Teil 50b aufweist. Der beweglichen Teil 50a der zweiteilig ausgeführten Gutkabel-Entnahmewanne 50 kann beispielsweise mittels eines (nicht dargestellten) Pneumatikzylinders längs verschiebbar sein, damit kurze Kabel aus dem schwer zugänglichen Teil der Maschine unter einer Schutzhaube heraustransportiert und auch bei laufender Maschine entnommen werden können. Auch wenn es nicht dargestellt ist, ist dieses Prinzip grundsätzlich auch auf die Schlechtkabel-Entnahmewanne 70 anwendbar.

In Fig. 5 ist erkennbar, dass die Sortiervorrichtung 60 in der Ausführungsform ein langgestreckter Körper ist, der insgesamt um die Drehachse D drehbar ist. Der Kopf des Schwenkzylinders 41 ist derart an der Gutkabel-Ablagewanne 30 angebracht, dass die Gutkabel-Ablagewanne 30 bei einer Verschwenkbewegung mittels des Schwenkzylinders 41 die dort enthaltenen Gutkabel in die Gutkabel-Entnahmewanne 50 ausgibt.

Weitere Aspekte, die in der vorliegenden Anmeldung offenbart sind und mit oben beschriebenen Ausführungsformen der Erfindung kombiniert werden können, werden im Folgenden erläutert.

Gemäss einem Aspekt der Offenbarung, der mit einer oder mehreren der oben beschriebenen Ausführungsformen der Erfindung kombiniert werden kann, umfasst die Gutkabel-Übernahmeeinrichtung eine Gutkabel-Ablagewanne sowie die beschriebene Gutkabel-Entnahmewanne. Die Gutkabel-Ablagewanne ist zur Übernahme von Gutkabeln einer Mehrzahl von in einem Kabellos enthaltenen Kabeln ausgebildet. In diesem Kontext kann es auch vorgesehen sein, dass die Gutkabel-Ablagewanne zum Übergeben der Mehrzahl von Kabeln in die Gutkabel-Entnahmewanne konfiguriert ist, wenn die Menge der Mehrzahl von Kabeln der Grösse des Kabelloses entspricht. Es ist dann möglich, dass die Gutkabel-Entnahmewanne genau zwei Zustände einnehmen kann: Entweder ist sie leer, oder es steht genau die Menge an Gutkabeln in der Gutkabel-Entnahmewanne bereit, die einem Kabellos entspricht.

Gemäss einem Aspekt der Offenbarung, der mit einer oder mehreren der oben beschriebenen Ausführungsformen der Erfindung kombiniert werden kann, ist die Gutkabel-Ablagewanne relativ zur Entnahmewanne derart verkippbar und/oder verschwenkbar ausgebildet, dass beim Übergeben die Mehrzahl von Kabeln in die Gutkabel-Entnahmewanne gleitet. Dadurch ist eine besonders einfache Möglichkeit der Kabelüberführung aus der Gutkabel-Ablagewanne in die Gutkabel-Entnahmewanne gegeben. Vorzugsweise erfolgt das Verkippen bzw. Verschwenken automatisch. Besonders vorzugsweise erfolgt das Verkippen bzw. Verschwenken durch eine automatische Ansteuerung eines pneumatischen Aktors.

Gemäß einem Aspekt der Offenbarung, der mit einer oder mehreren der oben beschriebenen Ausführungsformen der Erfindung kombiniert werden kann, ist die Gutkabel-Entnahmewanne bei Ausführungsformen so ausgebildet, dass sie einen beweglichen Teil und einen feststehenden Teil umfasst. Der bewegliche Teil ist längs verschiebbar. Insbesondere ist der bewegliche Teil automatisch längs verschiebbar. Vorzugsweise ist der bewegliche Teil pneumatisch längs verschiebbar.

Alternativ oder zusätzlich ist gemäß einem Aspekt der Offenbarung, der mit einer oder mehreren der oben beschriebenen Ausführungsformen der Erfindung kombiniert werden kann, die Schlechtkabel-Entnahmewanne so ausgebildet, dass sie einen beweglichen Teil und einen feststehenden Teil umfasst. Der bewegliche Teil ist längs verschiebbar. Insbesondere ist der bewegliche Teil automatisch längs verschiebbar. Vorzugsweise ist der bewegliche Teil pneumatisch längs verschiebbar.

## Patentansprüche

1. Kabelbearbeitungsvorrichtung (100), umfassend:
- mindestens eine Bearbeitungseinheit (101, 103, 105) zur Konfektionierung eines Kabels;
- eine mit einem Selektionssignal (S) ansteuerbare Sortiereinrichtung (60) zum Ausgeben eines aus der Bearbeitungseinheit übernommenen Kabels auf einer ersten Seite (A) oder auf einer zweiten Seite (B) gemäss dem Selektionssignal (S);
- eine Selektionseinrichtung (80) zum Ausgeben des Selektionssignals (S) an die Sortiereinrichtung (60) in Abhängigkeit einer detektierten Konfektionierungsqualität des Kabels;
- eine Detektionseinheit (90) zur Detektion der Konfektionierungsqualität des Kabels, wobei die Konfektionierungsqualität des Kabels eine ausreichende Qualität des Kabels umfasst, bei der das Kabel als Gutkabel klassifiziert wird, und eine nicht ausreichende Qualität des Kabels umfasst, bei der das Kabel als Schlechtkabel klassifiziert wird;
- auf der ersten Seite (A) eine Gutkabel-Übernahmeeinrichtung (31) und auf der zweiten Seite (B) eine Schlechtkabel-Übernahmeeinrichtung (70);
- ein Transportband (20) zum Übergeben des Kabels aus der mindestens einen Bearbeitungseinheit in die Sortiereinrichtung (60),
**dadurch gekennzeichnet, dass** die Sortiereinrichtung (60) eine Mehrfachwanne mit zwei oder mehr Wannenkammern (1, 2, 3) .1 ist, die um eine ungefähr parallel zur Kabelachse des übernommenen Kabels verlaufende Drehachse (D) gemäss dem Selektionssignal (S) in Richtung der ersten Seite (A) oder entgegengesetzt in Richtung der zweiten Seite (B) drehbar ist, derart, dass die Gutkabel-Übernahmeeinrichtung das Gutkabel übernimmt und die Schlechtkabel-Übernahmeeinrichtung das Schlechtkabel übernimmt.

2. Kabelbearbeitungsvorrichtung (100) nach Anspruch 1,
wobei die Mehrfachwanne drei etwa gleich grosse Wannenkammern umfasst.

3. Kabelbearbeitungsvorrichtung (100) nach Anspruch 1 oder 2,
wobei die Gutkabel-Übernahmeeinrichtung (31) eine Gutkabel-Entnahmewanne (50) umfasst.

4. Kabelbearbeitungsvorrichtung (100) nach einem der Ansprüche 1 bis 3,
wobei die Schlechtkabel-Übernahmeeinrichtung (70) eine Schlechtkabel-Entnahmewanne (70) umfasst.

## Claims

1. A cable processing device (100), comprising:
- at least one processing unit (101, 103, 105) for assembling a cable;
- a sorting device (60) activatable by a selection signal (S) for outputting a cable taken over from the processing unit on a first side (A) or on a second side (B) according to the selection signal (S) ;
- a selection device (80) for outputting the selection signal (S) to the sorting device (60) as a function of a detected assembly quality of the cable;
- a detection unit (90) for detecting the assembly quality of the cable, wherein the assembly quality of the cable comprises a sufficient quality of the cable, at which the cable is classified as a good cable, and an insufficient quality of the cable, at which the cable is classified as a bad cable;
- a good cable transfer device (31) on the one side (A), and a bad cable transfer device (70) on the second side (B);
- a conveyor belt (20) for transferring the cable from the at least one processing unit into the sorting device (60),
**characterized in that** the sorting device (60) is a multiple trough with two or more trough chambers (1, 2, 3), which can be turned around an rotational axis (D) running roughly parallel to the cable axis of the received cable according to the selection signal (S) in the direction of the first side (A) or oppositely in the direction of the second side (B), such that the good cable transfer device takes over the good cable and the bad cable transfer device takes over the bad cable.

2. The cable processing device (100) according to claim 1, wherein the multiple trough comprises three trough chambers of roughly the same size.

3. The cable processing device (100) according to claim 1 or 2, wherein the good cable transfer device (31) comprises a good cable removal trough (50).

4. The cable processing device (100) according to one of claims 1 to 3, wherein the bad cable transfer device (70) comprises a bad cable removal trough (70).

## Revendications

1. Dispositif de traitement de câble (100), comprenant :
- au moins une unité de traitement (101, 103, 105) pour la confection d'un câble,
- un système de triage (60) pouvant être actionné par un signal de sélection (S) pour sortir un câble pris en charge de l'unité de traitement sur un premier côté (A) ou sur un deuxième côté (B) selon le signal de sélection (S),
- un système de sélection (80) pour l'émission du signal de sélection (S) au système de triage (60) en fonction d'une qualité de confection détectée du câble,
- une unité de détection (90) pour la détection de la qualité de confection du câble, sachant que la qualité de confection du câble comprend une qualité suffisante du câble pour laquelle le câble est classé en tant que bon câble et comprend une qualité insuffisante de câble pour laquelle le câble est classé en tant que mauvais câble,
- un système de prise en charge de bon câble (31) sur le premier côté (A) et un système de prise en charge de mauvais câble (70) sur le deuxième côté (B),
- une bande transporteuse (20) pour le transfert du câble d'au moins une unité de traitement au système de triage (60),
**caractérisé en ce que** le système de triage (60) est un bac multiple avec deux chambres de bacs (1, 2, 3) ou plus, qui peut être tourné autour d'un axe de rotation (D) passant à peu près parallèlement à l'axe de câble du câble pris en charge selon le signal de sélection (S) en direction du premier côté (A) ou à l'opposé en direction du deuxième côté (B) de telle manière que le système de prise en charge de bon câble prend en charge le bon câble et le système de prise en charge de mauvais câble prend en charge le mauvais câble.

2. Dispositif de traitement de câble (100) selon la revendication 1, sachant que le bac multiple comprend trois chambres de bacs à peu près de la même taille.

3. Dispositif de traitement de câble (100) selon la revendication 1 ou 2, sachant que le système de prise en charge du bon câble (31) comprend un bac de prélèvement de bon câble (50).

4. Dispositif de traitement de câble (100) selon l'une quelconque des revendications 1 à 3, sachant que le système de prise en charge du mauvais câble (70) comprend un bac de prélèvement de mauvais câble (70).
